# EUROPÄISCHE PATENTSCHRIFT

(11) **EP 1 342 615 B1**
(45) Veröffentlichungstag und Bekanntmachung des Hinweises auf die Patenterteilung: **24.03.2010**
(21) Anmeldenummer: 02027326.4
(22) Anmeldetag: 07.12.2002
(51) Int. Cl.: B60P 1/54, F41H 7/02

(54) **Integrierte Lastenhebeeinrichtung für gepanzerte Fahrzeuge, insbesondere Kampffahrzeuge**
Integrated lifting device for armoured vehicle, particularly for combat vehicles
Dispositif de levage intégré pour voiture blindée, en particulier pour des véhicules de combat

(30) Priorität: 09.03.2002 DE 10210520; 12.04.2002 DE 10217990
(43) Veröffentlichungstag der Anmeldung: 10.09.2003
(73) Patentinhaber: Rheinmetall Landsysteme GmbH, 24107 Kiel (DE)
(72) Erfinder: Diller, Armin, 86199 Augsburg (DE); Mall, Hans, 82256 Fürstenfeldbruck (DE); Riedl, Jürgen, 86343 Königsbrunn (DE)
(74) Vertreter: Dietrich, Barbara

(56) Entgegenhaltungen:
- DE-A- 1 907 050
- DE-U- 29 921 301
- US-A- 4 796 721
- US-A- 5 431 443
- FOSS: "Jane's Combat Support Equipment" 1978 , JANE'S YEARBOOKS , LONDON XP002271485 * Seite 7 * * Seite 23 * * Seite 24 * * Seite 28 *
- PATENT ABSTRACTS OF JAPAN vol. 010, no. 062 (M-460), 12. März 1986 (1986-03-12) -& JP 60 209338 A (HITACHI SEISAKUSHO KK), 21. Oktober 1985 (1985-10-21)
- VOS: "Moderne Artillerie: inleiding en amerikaans gemechaniseerd geschut W.O. II" , DE ALK , ALKMAAR (NL) XP002271486 * Seite 61, Zeile 41 - Seite 63, Zeile 17; Abbildung 56 *

## Beschreibung

Die Erfindung bezieht sich auf eine integrierte Lastenhebeeinrichtung für gepanzerte Fahrzeuge, insbesondere Kampffahrzeuge, das sich aus den üblichen Teilen wie Antriebsmotor, Getrieben, Radsätzen oder Kettenlaufwerk, einem Besatzungsraum und einem Gehäuse, das alle Ein- und Anbauten aufnimmt, und in vielen Fällen einer fahrzeugfesten Waffenanlage zusammensetzt.

Von einem derartigen Fahrzeug wird häufig auch gefordert, dass es trotz seines Gewichtes luftverlastbar ist und mittels Flugzeug oder Hubschrauber transportiert werden kann. Die Forderung der Luftverlastbarkeit von Kampffahrzeugen mit einer damit verbundenen Gewichtsbeschränkung steht im Gegensatz zu der Forderung nach einem hohen ballistischen Schutzniveau, welches wiederum mit einem erhöhten Fahrzeuggewicht einhergeht. Neben einer Reduzierung des Fahrzeuggewichts ist eine andere systemtechnische Lösung, ein Komplettfahrzeug in Teileinheiten zu transportieren. Dies kann zum Beispiel ein Basisfahrzeug mit einer adaptiven Zusatzpanzerung sein, welche vor einer Luftverladung vom Fahrzeug entfernt, mit einem zusätzlichen Transportmittel transportiert und am Zielort nach der Entladung wieder am Fahrzeug montiert wird. Die Zusatzpanzerungselemente werden aufgrund ihres hohen Eigengewichts entweder mittels einer externen Kraneinrichtung oder von Hand am Fahrzeug de- oder aufmontiert, sofern die Elemente in handhabbare Module unterteilt sind.

Bei einer Zusatzpanzerung als beispielhaftes Fahrzeugmodul ist für die Montage entweder ein externer Kran erforderlich oder die Schutzmodule sind in sehr viele von der Besatzung handhabbare Stücke zu unterteilen, da es ballistischen Schutz ohne entsprechendes Gewicht nicht gibt.

Der Nachteil dieser Lösung liegt vor allem darin, dass entweder ein zusätzliches Kranfahrzeug oder ein Bergepanzer eingesetzt werden muss oder dass die Montage bei sehr vielen kleinen Schutzmodulen aufwendig und langwierig wird.

Belässt man die Schutzmodule in ihrer konstruktiv bedingten Größe, ist ein Kampffahrzeug bei der Auf- und Abrüstung nach heutigem Stand der Technik auf ein externes Kranfahrzeug mit Hebevorrichtung angewiesen. Dabei kann es zu logistischen Engpässen kommen, da es nur eine begrenzte Anzahl Kranfahrzeuge bei der Truppe gibt für sehr viele Aufgaben. Die Auf- und Umrüstung von mehreren Fahrzeugen kann dann kaum parallel oder nur abhängig von der Anzahl der bereitstehenden Hebezeuge erfolgen. Werden die Schutzmodule andererseits in handliche Stücke unterteilt, so führt dies neben einem reduzierten ballistischen Schutz in den Randbereichen dieser Stücke auch zu höheren Auf- und Umrüstzeiten wegen der großen Anzahl der Module

Mit der US 5,431,443 wird eine Stützvorrichtung für ein Bergefahrzeug offenbart, die das Fahrzeug beim Heben einer Last mittels eines Krans abstützen. Dieser ist u. a. mit einer Hubwinde und einem Kranhaken ausgerüstet.

Im Artikel "Jane's Combat Support Equipment" Handbuch, Ausgabe 1978-1979 wird ein Reparaturfahrzeug (AMX-10 ECH) mit einer so genannten Lasthebeeinrichtung mit einem ausziehbaren Ausleger gezeigt. Dieser ist an der rechten Seite auf dem Dach des Fahrzeuges angebracht.

In der DE 42 19 688 wird ein luftverlastbares Panzerfahrzeug aus einem Fahrgestell und darauf angeordneten mehreren Gehäuseteilen aufgebaut, wobei ein Gehäuseteil aus einem fahrgestellfesten Unterteil und einem beweglichen Oberteil besteht, welches bei Lufttransport vertikal eingeschoben werden kann zur Verminderung des Fahrzeugvolumens.

In der DE 19 02 036 wird ein Kettenfahrzeug schnell und kostensparend an unterschiedliche Einsatzforderungen angepasst, in dem der Wannenaufbau modular gestaltet und aus mindestens zwei Modulen besteht.

In der DE 19 619 865 wird ein umrüstbares militärisches Radfahrzeug mit trennbaren Modulen dargestellt, das aus einem Grundgehäuse zur Aufnahme der Fahrzeugkomponenten besteht und von einem diesel-mechanischen zu einem diesel-elektrischen Antrieb umgebaut werden kann bei Vorteilen für die Bauhöhe und Ausgestaltung des Fahrzeuge.

Aufgabe der Erfindung ist es, ein militärisches Fahrzeug, welches, anders als bei der ähnlichen AMX-10 ECH, vom hauptsächlichen Einsatzzweck nicht als Kranfahrzeug ausgelegt ist, unabhängig von einem zusätzlichen Kran zu machen, um verschiedenste Aufgaben, die ohne Hebezeug nicht durchführbar sind, autark zu erfüllen, bzw. Tätigkeiten, die nach heutigem Stand der Technik manuell durchgeführt werden, einfacher und / oder schneller zu gestalten.

Diese Aufgabe wird erfindungsgemäß durch die kennzeichnenden Merkmale des Anspruchs 1bzw. 2 gelöst. Weitere Merkmale ergeben sich aus den Unteransprüchen.

Erfindungsgemäß wird ein Kampffahrzeug mit einer bordeigenen integrierten Hebevorrichtung ausgestattet. Eine Aufgabe der fahrzeugintegrierten Hebevorrichtung kann die De- und Remontage von Zusatzpanzerungsmodulen sein, welche derzeit ausschließlich mit externen Hebeeinrichtungen erfolgt. Darüber hinaus können mit der Vorrichtung allgemeine Reparatur- und Kranarbeiten ausgeführt werden.

Die Hebeeinrichtung muss in der Lage sein, Lasten, die sich vor, hinter oder neben dem Fahrzeug befinden, an eine beliebige Position am Fahrzeug zu befördern. Diese Hebeeinrichtung wird an geeigneter Stelle auf dem Fahrzeug so eingebaut, dass andere Funktionen und Einbauten auf dem Fahrzeug für den regulären Betrieb nicht gestört werden.

Die Vorteile der Erfindung liegen darin, dass
- Auf- und Umrüstzeiten bezüglich zum Beispiel Zusatzpanzerungsmodulen wegen des Vorhandenseins einer fahrzeugintegrierten Hebeeinrichtung minimal sind,
- dass der Rüstvorgang unabhängig vom Vorhandensein eines Unterstützungsfahrzeuges oder Kranes durchgeführt werden kann und
- dass die integrierte Hebevorrichtung auch für Reparatur- und Transportarbeiten am eigenen oder an anderen Fahrzeugen eingesetzt werden kann.

Andererseits wird auch der Schutz durch viele kleine Schutzelemente nicht herabgesetzt wie bei dem Fall der Zerstückelung der Schutzmodule in handhabbare kleine Teile für die manuelle Handhabung.

Zusätzlich kann das Fahrzeug mit Hebeeinrichtung auch Unterstützungsdienste für andere Fahrzeuge leisten.

Ausführungsbeispiele der Erfindung sind in den Zeichnungen schematisch dargestellt und werden im folgenden näher beschrieben. Es zeigen:
- Figur 1:: eine Ansicht eines turmlosen Fahrzeuges mit Hebeeinrichtung
- Figur 2:: eine Ansicht eines Fahrzeuges mit Waffenturm und mit einer Hebeeinrichtung
- Figur 3:: eine Alternativanordnung der Hebeanordnung
- Figur 4:: eine weitere Alternativanordnung der Hebeanordnung

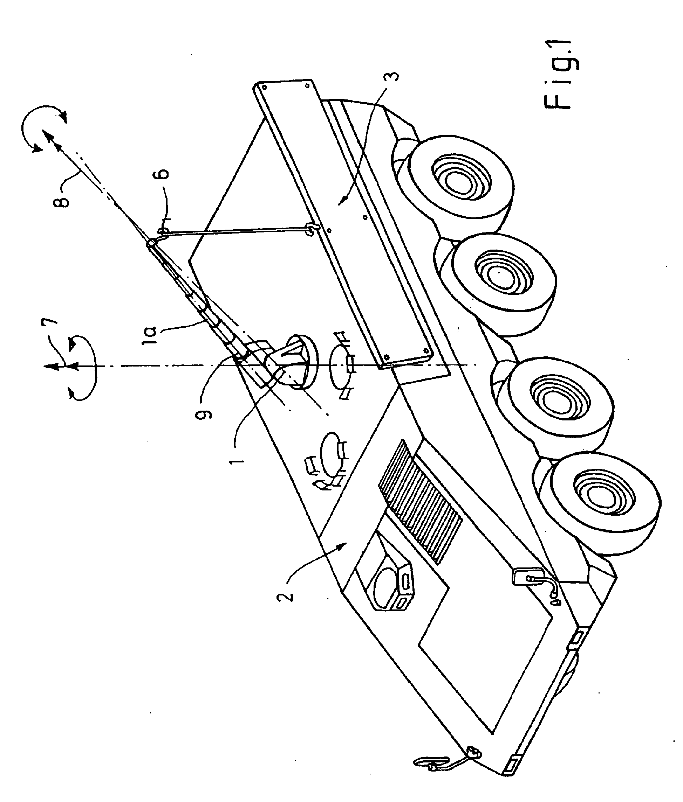

Figur 1 zeigt ein gepanzertes Fahrzeug 2, zum Beispiel ein gepanzertes Transportfahrzeug, mit einer Last- bzw. Hebeeinrichtung 1, welche zentral auf dem Fahrzeugdach befestigt ist und ein Zusatzpanzermodul 3 am Kranhaken 6 hat. Die Hebeeinrichtung 1 ist um oder in drei Achsen 7, 8, 9 bewegbar.

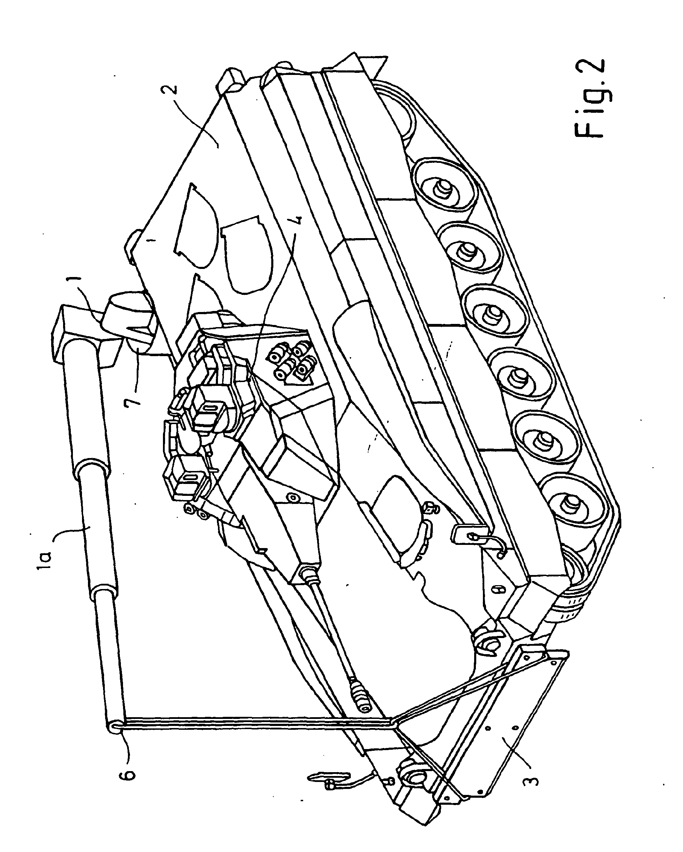

Figur 2 zeigt ein Fahrzeug 2 mit einem Waffenturm 4, welches eine Hebeeinrichtung 1 seitlich am Fahrzeugheck besitzt. Die Hebeeinrichtung 1 besitzt einen dreitelligen Teleskopausleger 1a, welcher in Längsrichtung aus- und eingefahren werden kann. Die Hebeeinrichtung 1 besitzt weiterhin Drehantriebe in der Konsole 7 für die Seitendrehung um eine Hochachse und für das Schwenken des Auslegers 1a nach oben oder unten. Am Lasthebegeschirr 6 des Auslegers 1a hängt ein Zusatzpanzermodul 3.

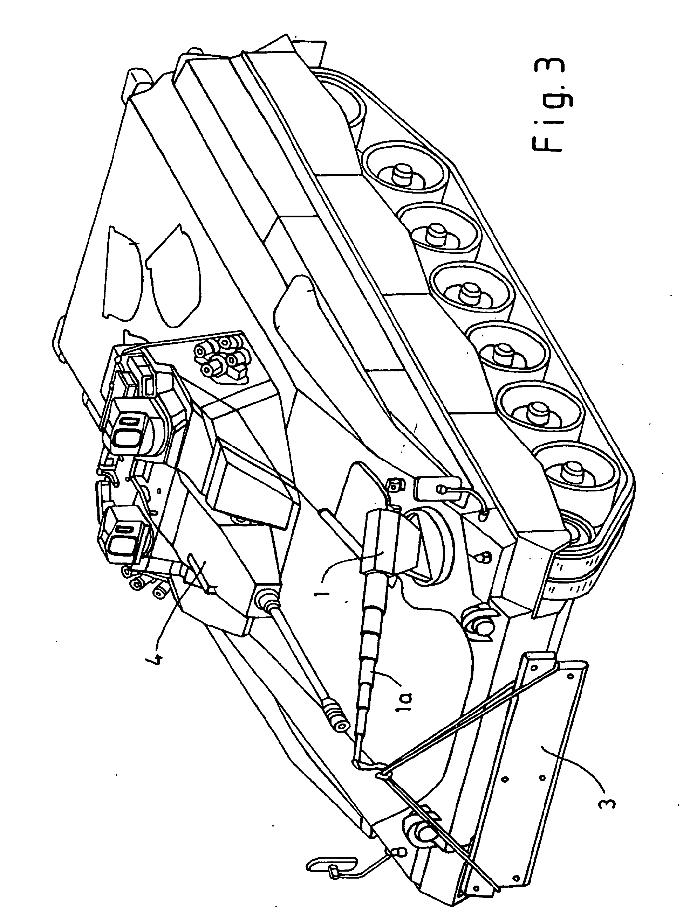

Alternativ ist die Hebeeinrichtung 1 in Figur 3 mit einem mehrteiligen Teleskopausleger 1a ausgerüstet und am Fahrzeugbug auf der linken Seite in Fahrtrichtung untergebracht.

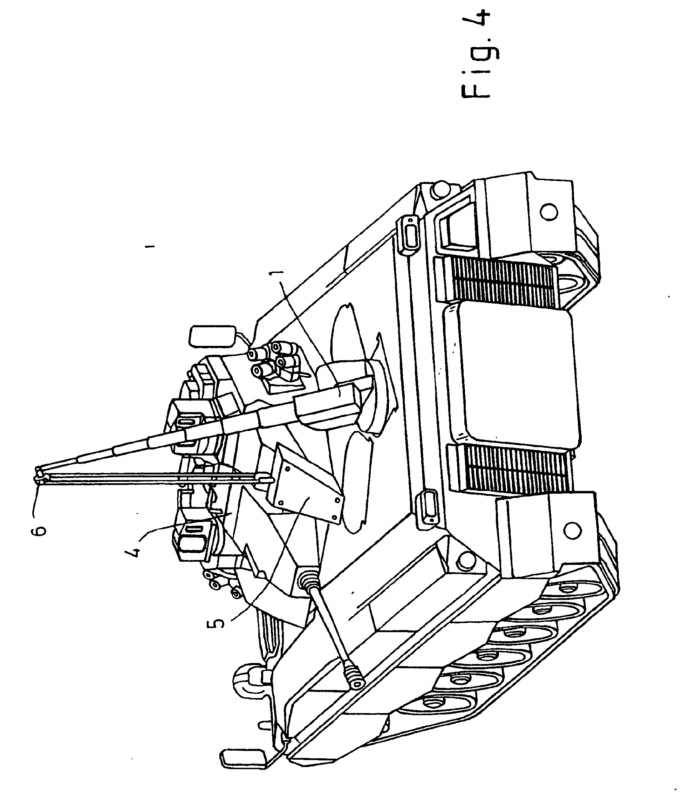

In Figur 4 ist die Hebeeinrichtung 1 mittig am Fahrzeugheck untergebracht und am Lasthebegeschirr 6 hängt ein Zusatzpanzerungsmodul 5 fertig zur Montage am Turm 4.

Die Hebeeinrichtung 1 wird an geeigneter Stelle am Fahrzeug 2 so eingebaut, dass sie missionsbedingte Funktionen des Fahrzeugs 2 nicht beeinträchtigt. Das bedeutet zum Beispiel, dass die Hebeeinrichtung bei einem turmlosen Fahrzeug (Figur 1) versenkt werden kann oder auf andere Art unschädlich für die Fahrzeugsilhouette gemacht wird, damit das Fahrzeug aufgrund der zusätzlichen Hebeeinrichtung nicht leichter aus der Entfernung aufgeklärt werden kann.

Bei einem Fahrzeug 2 mit einem Waffenturm (Figur 3) ist der Anbau am Fahrzeug 2 so vorzunehmen, dass Waffen- und Turmfunktionen nicht beeinträchtigt werden. Das bedeutet, dass die Hebeeinrichtung 1 zum Beispiel seitlich am Fahrzeug 2 in einer Vertiefung eingebaut wird, dass sie eingefahren und verzurrt werden kann oder dass sie teilweise versenkbar oder abnehmbar ausgestaltet wird, damit das Fahrzeug im regulären Betrieb nicht eingeschränkt wird. Die Bedienung der Hebeeinrichtung 1 kann mittels Bediengerät im Fahrzeug 2 als Fernsteuerung für die drei Achsen 7, 8, 9, die einen Arbeitsraum für die Hebeeinrichtung 1 bilden, ausgeführt werden oder mittels mobilem Bediengerät, wobei der Bediener sich dann neben dem Fahrzeug 2 aufhalten kann.

Die konzeptionelle Ausführung einer Hebeeinrichtung 1 ist abhängig von Fahrzeugtyp und -anforderung. Neben der in der Figur dargestellten Ausführung mit einem Teleskopausleger 1a sind ebenfalls alle anderen technisch realisierbaren Ausführungen für die Realisierung einer Linearbewegung in Richtung des Auslegers vorstellbar. Der Antrieb dafür kann manuell betätigt oder mit Fremdkraft betrieben sein.

Bei Nichtgebrauch kann die Hebeeinrichtung 1 entweder am Fahrzeug fest eingebaut und in einer Zurrposition verbleiben oder auch bei entsprechend geringem Gewicht und Geometrie abgebaut, im Fahrzeug 2 mitgeführt oder an geeignetem Ort gelagert werden. Es ist auch vorstellbar, die Hebeeinrichtung 1 so zu gestalten, dass diese bei geringer Modifikation für verschiedene Einsatzzwecke nutzbar ist, zum Beispiel mit Auslegern verschiedener Länge. Die Schnittstelle zum Fahrzeug 2 wird vorzugsweise so gestaltet, dass die Hebeeinrichtung bei verschiedene Türme mittels einer geeigneten Anflanschfläche adaptiert werden kann.

Die Hebeeinrichtung 1 ist bezüglich Lastaufnahmehaken und -geschirr so ausgebildet, dass Panzerplatten als Schutzmodule neben dem Fahrzeug 2 aufgenommen werden und an jede Position des äußeren Fahrzeuggehäuses zur dortigen Montage gebracht werden können. Mit entsprechend eingerichteten Lasthebehaken und/oder -geschirr können zudem verschiedene Lasttransport- und Reparaturaufgaben am Fahrzeug ausgeführt werden. Mittels verlängertem Ausleger 1a kann die Lasthebeeinrichtung 1 auch für Hebeaufgaben an einem zweiten neben dem Trägerfahrzeug 2 stehenden Fahrzeug benutzt werden.

Alternativ kann der Ausleger (1a) der Hebeeinrichtung (1) anstelle des Teleskopauslegers auch als Stangenführung oder Robotergreifarm ausgebildet sein.

## Patentansprüche

1. Integrierte Lastenhebevorrichtung (1) für gepanzerte Gefechtsfahrzeuge (2), insbesondere Kampffahrzeuge, mit einem Radfahr- oder Kettenlaufwerk und einem Antrieb zur Fortbewegung sowie einem Fahrzeugaufbau zur Aufnahme und Einbau aller Komponenten für den Betrieb des Fahrzeugs einschließlich einer Fahrzeugbesatzung und spezifischen Ausrüstung für ein Missionsfahrzeug, wobei
- die Lastenhebeeinrichtung (1) mit einem Kranausleger (1a) an einer geeigneten Flanschfläche am Fahrzeug (2) befestigt wird,
- die Lastenhebeeinrichtung (1) mittels Linear- und / oder Drehantrieben ausgerüstet ist, um Lastenhebearbeiten an allen erreichbaren Stellen des Trägerfahrzeugaufbaus ausführen zu können,
- die Lastenhebeeinrichtung (1) an einer beliebigen Stelle an Gefechtsfahrzeugen oder auf dem Fahrzeugdeck eines Gefechtsfahrzeugs aufgebaut wird und
- bei einem turmlosen Fahrzeug (2) die Hebeeinrichtung (1) versenkt oder auf andere Art unschädlich für die Fahrzeugsithouette gemacht werden kann.

2. Integrierte Lastenhebevorrichtung (1) für gepanzerte Gefechtsfahrzeuge (2), insbesondere Kampffahrzeuge, mit einem Radfahr- oder Kettenlaufwerk und einem Antrieb zur Fortbewegung sowie einem Fahrzeugaufbau zur Aufnahme und Einbau aller Komponenten für den Betrieb des Fahrzeugs einschließlich einer Fahrzeugbesatzung und spezifischen Ausrüstung für ein Missionsfahrzeug, wobei
- die Lastenhebeeinrichtung (1) mit einem Kranausleger (1a) an einer geeigneten Flanschfläche am Fahrzeug (2) befestigt wird,
- die Lastenhebeeinrichtung (1) mittels Linear- und / oder Drehantrieben ausgerüstet ist, um Lastenhebearbeiten an allen erreichbaren Stellen des Trägerfahrzeugaufbaus ausführen zu können,
- die Lastenhebeeinrichtung (1) an einer beliebigen Stelle an Gefechtsfahrzeugen oder auf dem Fahrzeugdeck eines Gefechtsfahrzeugs aufgebaut wird und
- bei einem Fahrzeug mit einem Turm die Hebeeinrichtung seitlich in eine Vertiefung eingebaut ist oder eingefahren und verzurrt werden kann oder abnehmbar ausgestaltet ist.

3. Lasthebeeinrichtung nach Anspruch 1 oder 2, **dadurch gekennzeichnet, dass** die Lastenhebeeinrichtung (1) über eine Schnittstelle zwischen Lastenhebeeinrichtung (1) und Fahrzeug (2) an verschiedene Fahrzeuge (2) adaptiert und aufgerüstet werden kann.

4. Lasthebeeinrichtung nach einem der Ansprüche 1 bis 3, **dadurch gekennzeichnet, dass** der Ausleger (1 a) der Hebeeinrichtung (1) mittels Teleskopausleger oder Stangenführung oder Robotergreifarm ausgebildet wird.

5. Lasthebeeinrichtung nach Anspruch 4, **dadurch gekennzeichnet, dass** der teleskopierbare Ausleger (1a) einen Lastaufnahmehaken oder -geschirr (6) besitzt und der Ausleger (1a) auf eine maximale Ausfahrlänge ausgefahren sowie auf eine minimale Länge und Zurrposition eingefahren werden kann.

6. Lasthebeeinrichtung nach Anspruch 4 oder 5, **dadurch gekennzeichnet, dass** der Ausleger (1a) ein drei- oder mehrteiligen Teleskopausleger (1a) ist.

7. Lasthebeeinrichtung nach einem der Ansprüche 1 bis 6, **dadurch gekennzeichnet, dass** die Hebeeinrichtung (1) einen Arbeitsraum mit drei Koordinaten, welche mit einer Seitendrehachse (7) und einer Höhendrehachse (8) sowie der Ausfahrachse (9) des Teleskops (1a) gebildet werden, abdeckt.

8. Lasthebeeinrichtung nach einem der Ansprüche 1 bis 7, **dadurch gekennzeichnet, dass** der Antrieb der Drehachsen (7, 8) und / oder der Ausfahrachse (9) des Auslegers (1a) manuell mittels eines Getriebes aus dem Innenraum oder von außen bedient oder mittels hydraulischer oder elektrischer Hilfskraftenergie ausgeführt wird.

9. Lasthebeeinrichtung nach einem der Ansprüche 1 bis 8, **dadurch gekennzeichnet, dass** die Hebeeinrichtung (1) entweder am Fahrzeug fest eingebaut in einer Zurrposition verbleiben oder bei entsprechendem Gewicht abgebaut im Fahrzeug (2) mitgeführt oder an einem geeigneten Ort gelagert werden kann.

10. Vorrichtung nach einem der oben genannten Ansprüche 1 bis 9, **dadurch gekennzeichnet, dass** die Lasthebeeinrichtung (1) mittels verlängertem Ausleger (1a) auch für Hebeaufgaben an einem zweiten neben dem Trägerfahrzeug (2) stehenden Fahrzeug benutzt werden kann.

11. Vorrichtung nach einem der oben genannten Ansprüche 1 bis 10, **dadurch gekennzeichnet, dass** die Hebeeinrichtung (1) bei entsprechend fremdangetriebenen Achsen mittels einer Fernbedienung aus dem Fahrzeug heraus oder von einem Bediener neben dem Fahrzeug ferngesteuert werden kann.

## Claims

1. Integrated load lifting apparatus (1) for armoured battle vehicles (2), in particular combat vehicles, having a wheel or track chassis and a drive for propulsion, and having a vehicle structure for holding and installing all the components for operation of the vehicle, including a vehicle crew and specific equipment for a mission vehicle, wherein
- the load lifting device (1) is attached by means of a crane jib (1a) to a suitable flange surface on the vehicle (2),
- the load lifting device (1) is equipped with linear and/or rotary drives in order to allow load lifting tasks to be carried out at all points which can be accessed on the carrier vehicle structure,
- the load lifting device (1) is fitted at any desired point to the battle vehicles or on the vehicle roof of a battle vehicle, and
- if the vehicle (2) has no turret, the lifting device (1) can be lowered or can be made to have no disadvantageous effect on the vehicle silhouette in some other way.

2. Integrated load lifting apparatus (1) for armoured battle vehicles (2), in particular combat vehicles, having a wheel or track chassis and a drive for propulsion, and having a vehicle structure for holding and installing all the components for operation of the vehicle, including a vehicle crew and specific equipment for a mission vehicle, wherein
- the load lifting device (1) is attached by means of a crane jib (1a) to a suitable flange surface on the vehicle (2),
- the load lifting device (1) is equipped with linear and/or rotary drives in order to allow load lifting tasks to be carried out at all points which can be accessed on the carrier vehicle structure,
- the load lifting device (1) is fitted at any desired point to the battle vehicles or on the vehicle roof of a battle vehicle, and
- if the vehicle has a turret, the lifting device is installed in a depression at the side, or can be moved into and lashed in a depression at the side, or is designed such that it can be removed therefrom.

3. Load lifting device according to Claim 1 or 2, **characterized in that** the load lifting device (1) can be adapted and upgraded to different vehicles (2) by means of an interface between the load lifting device (1) and the vehicle (2).

4. Load lifting device according to one of Claims 1 to 3, **characterized in that** the jib (1a) of the lifting device (1) is formed by means of a telescopic jib, rod guide or robot gripping arm.

5. Load lifting device according to Claim 4, **characterized in that** the telescopic jib (1a) has a load pick-up hook or harness (6), and the jib (1a) can be extended to a maximum extension length, and can be retracted to a minimum length and lashed position.

6. Load lifting device according to Claim 4 or 5, **characterized in that** the jib (1a) is a three-part or multi-part telescopic jib (1a).

7. Load lifting device according to one of Claims 1 to 6, **characterized in that** the lifting device (1) covers a working area with three coordinates which are formed by an azimuth rotation axis (7) and elevation rotation axis (8) and the extension axis (9) of the telescope (1a).

8. Load lifting device according to one of Claims 1 to 7, **characterized in that** the rotation axes (7, 8) and/or the extension axis (9) of the jib (1a) are/is driven manually by means of a gearbox from the interior, or are/is operated externally, or are/is provided by hydraulic or electrical auxiliary power energy.

9. Load lifting device according to one of Claims 1 to 8, **characterized in that** the lifting device (1) either remains permanently installed in a lashed position on the vehicle or, if the weight is appropriate, can be carried built out in the vehicle (2), or can be mounted at a suitable location.

10. Apparatus according to one of the abovementioned Claims 1 to 9, **characterized in that** lengthened jib (1a) also allows the load lifting device (1) to be used for lifting tasks on a second vehicle located alongside the carrier vehicle (2).

11. Apparatus according to one of the abovementioned Claims 1 to 10, **characterized in that**, if the axes are appropriately remotely driven, the lifting device (1) can be remotely controlled by means of a remote control from the vehicle or by an operator adjacent to the vehicle.

## Revendications

1. Dispositif de levage de charges intégré (1) pour des véhicules d'opérations blindés (2), en particulier des véhicules de combat, avec un ensemble de propulsion à roues ou à chenilles et un entraînement pour sa progression ainsi qu'une superstructure de véhicule pour le logement et le montage de tous les composants pour le fonctionnement du véhicule, y compris d'un équipage du véhicule et de l'équipement spécifique pour un véhicule de mission, dans lequel
- le dispositif de levage de charges (1) avec une flèche (1a) est fixé au véhicule (2) par une face de bride appropriée,
- le dispositif de levage de charges (1) est équipé de moyens d'entraînement en translation et/ou en rotation, afin de pouvoir exécuter des opérations de levage de charges à tous les endroits accessibles de la superstructure du véhicule porteur,
- le dispositif de levage de charges (1) est monté en un endroit quelconque sur des véhicules d'opérations ou sur le plateau d'un véhicule d'opérations, et
- dans un véhicule sans tourelle (2), le dispositif de levage de charges (1) peut être abaissé ou rendu d'une autre manière sans effet sur la silhouette du véhicule.

2. Dispositif de levage de charges intégré (1) pour des véhicules d'opérations blindés (2), en particulier des véhicules de combat, avec un ensemble de propulsion à roues ou à chenilles et un entraînement pour sa progression ainsi qu'une superstructure de véhicule pour le logement et le montage de tous les composants pour le fonctionnement du véhicule, y compris d'un équipage du véhicule et de l'équipement spécifique pour un véhicule de mission, dans lequel
- le dispositif de levage de charges (1) avec une flèche (1a) est fixé au véhicule (2) par une face de bride appropriée,
- le dispositif de levage de charges (1) est équipé de moyens d'entraînement en translation et/ou en rotation, pour pouvoir exécuter des opérations de levage de charges à tous les endroits accessibles de la superstructure du véhicule porteur,
- le dispositif de levage de charges (1) est monté en un endroit quelconque sur des véhicules d'opérations ou sur le plateau d'un véhicule d'opérations, et
- dans un véhicule avec une tourelle, le dispositif de levage de charges est monté ou peut être rentré et amarré latéralement dans un renfoncement ou être démontable.

3. Dispositif de levage de charges selon la revendication 1 ou 2, **caractérisé en ce que** le dispositif de levage de charges (1) peut être adapté et construit pour différents véhicules (2) au moyen d'une interface entre le dispositif de levage de charges (1) et le véhicule (2).

4. Dispositif de levage de charges selon l'une quelconque des revendications 1 à 3, **caractérisé en ce que** la flèche (1a) du dispositif de levage (1) est formée par une flèche télescopique ou un guidage à tige ou un bras de saisie robotique.

5. Dispositif de levage de charges selon la revendication 4, **caractérisé en ce que** la flèche télescopique (1a) comporte un crochet ou des agrès (6) de réception de charges et la flèche (1a) peut être étendue à une longueur d'extension maximale et rentrée à une longueur d'extension et d'amarrage minimale.

6. Dispositif de levage de charges selon la revendication 4 ou 5, **caractérisé en ce que** la flèche (1a) est une flèche télescopique (1a) en trois parties ou plus.

7. Dispositif de levage de charges selon l'une quelconque des revendications 1 à 6, **caractérisé en ce que** le dispositif de levage (1) couvre un espace de travail à trois coordonnées, qui sont formées par un axe de rotation latéral (7) et un axe de rotation en hauteur (8) ainsi que par l'axe d'extension (9) du télescope (1a).

8. Dispositif de levage de charges selon l'une quelconque des revendications 1 à 7, **caractérisé en ce que** l'entraînement des axes de rotation (7, 8) et/ou de l'axe d'extension (9) de la flèche (1a) est actionné manuellement au moyen d'une transmission à partir de l'espace intérieur ou de l'extérieur ou être effectué au moyen d'une énergie auxiliaire hydraulique ou électrique.

9. Dispositif de levage de charges selon l'une quelconque des revendications 1 à 8, **caractérisé en ce que** le dispositif de levage (1) peut soit rester dans une position d'amarrage en étant monté à poste fixe sur le véhicule soit emporté à l'état démonté dans le véhicule (2) avec un poids correspondant soit déposé en un endroit approprié.

10. Dispositif selon l'une quelconque des revendications précitées 1 à 9, **caractérisé en ce que** le dispositif de levage de charges (1) peut être utilisé également pour des missions de levage sur un deuxième véhicule stationné à côté du véhicule porteur (2), au moyen de la flèche étendue (1a).

11. Dispositif selon l'une quelconque des revendications 1 à 10, **caractérisé en ce que** le dispositif de levage (1) peut être télécommandé au moyen d'une télécommande depuis le véhicule ou par un opérateur situé à côté du véhicule, lorsque les axes sont équipés d'un entraînement séparé.
